(19) Europäisches Patentamt
European Patent Office
Office européen des brevets

(11) **EP 4 069 573 B1**

(12) **EUROPÄISCHE PATENTSCHRIFT**

(45) Veröffentlichungstag und Bekanntmachung des Hinweises auf die Patenterteilung:
**19.11.2025 Patentblatt 2025/47**

(21) Anmeldenummer: **19827817.8**

(22) Anmeldetag: **05.12.2019**

(51) Internationale Patentklassifikation (IPC):
***B62B 9/10*** *(2006.01)*

(52) Gemeinsame Patentklassifikation (CPC):
**B62B 9/104**

(86) Internationale Anmeldenummer:
**PCT/IB2019/060468**

(87) Internationale Veröffentlichungsnummer:
**WO 2021/111174 (10.06.2021 Gazette 2021/23)**

(54) **VORRICHTUNG ZUR NEIGUNGSVERSTELLUNG EINES OBJEKTS**

DEVICE FOR ADJUSTING THE INCLINATION OF AN OBJECT

DISPOSITIF DE RÉGLAGE DE L'INCLINAISON D'UN OBJET

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**12.10.2022 Patentblatt 2022/41**

(73) Patentinhaber: Endepro GmbH
**96257 Redwitz a.d.R. (DE)**

(72) Erfinder: **POPP, Alexander**
**96257 Redwitz (DE)**

(74) Vertreter: **Küchler, Stefan**
**Stefan T. Küchler**
**Patentanwalt**
**Färberstraße 20**
**90402 Nürnberg (DE)**

(56) Entgegenhaltungen:
**EP-A1- 0 479 132          EP-A2- 2 878 513**
**GB-A- 2 178 306          JP-A- 2003 095 113**
**US-A1- 2006 006 629**

**Beschreibung**

Die Erfindung richtet sich auf eine Vorrichtung zur Verstellung der Höhe oder des Abstandes oder der Neigung eines Objekts gegenüber einer Konstruktion, mit welcher es verschiebbar oder schwenkbar gekoppelt ist, beispielsweise als Verstelleinrichtung für die Neigung einer Rückenlehne eines Kinderwagens gegenüber dessen Chassis, wobei die Kopplung des Objekts mit der Konstruktion ein Zugmittel umfasst, welches wenigstens ein in seiner freien Länge verstellbares Trum aufweist, das im Bereich eines seiner Enden mit der Konstruktion und im Bereich seines anderen Endes mit der an dem zu verstellenden Objekt festgelegten Vorrichtung verbunden ist und bei der Verstellung der Tendenz unterliegt, selbsttätig verkürzt zu werden.

Die Verstellung der Rückenlehne eines Sitzes erfolgt üblicherweise mittels eines Gestänges und einem Zahn- oder Rändelrad. Dabei wird im Rahmen eines Kinderwagens mit verstellbarer Rückenlehne durch Ziehen an einem Teil des Gestänges die Rückenverstellung entriegelt, und sodann wird durch Drehen des Zahn- oder Rändelrades die Rückenlehne verstellt. Da diese beiden Aktionen gleichzeitig erfolgen müssen, werden dafür von einer Bedienperson stets zwei Hände benötigt, was u.a. auch deshalb unpraktisch ist, weil sich die Bedienperson währenddem nicht dem betreffenden Kind widmen kann.

Ein erster Versuch zur Vereinfachung der Neigungsverstellung einer Rückenlehne eines Kindersitzes ist aus der DE 10 2012 022 306 A1 bekannt. Diese offenbart einen Kindersitz mit einem Rahmen, einer Sitzfläche und einer gegenüber der Sitzfläche um eine rückwärtige Achse verschwenkbare Rückenlehne. An der Rückseite der Rückenlehne läuft ein Gurtband entlang, das dort verschiebbar geführt sein kann. Dieses Gurtband ist mit seinem oberen Ende an dem Rahmen des Kindersitzes befestigt und verläuft unterhalb der Sitzfläche nach vorne bis zu einer Klemmeinrichtung am vorderen Ende des Rahmens des Kindersitzes. Wird die Klemmeinrichtung gelöst, kann die Rückenlehne nach hinten schwingen, wobei das Gurtband durch die Klemmeinrichtung hindurch nach hinten läuft, so dass sich der Abstand zwischen dem oberen Ende der Rückenlehne und dem Rahmen des Kindersitzes vergrößern kann, während die Rückenlehne in die Liegeposition verstellt wird. Soll die Rückenlehne dagegen in eine aufrechte Sitzposition nach oben geschwenkt werden, muss an dem freien Ende des Gurtbandes gezogen werden, und jeweils nach Erreichen der gewünschten Einstellung wird die Klemmeinrichtung wieder festgeklemmt, um die eingestellte Position der Rückenlehne zu arretieren. Allerdings ist es für eine solche Verstellung stets erforderlich, zwei Hände zu Hilfe zu nehmen - mit einer Hand muss das Klemmelement bedient werden und ggf. die Gurtlänge verkürzt werden, während mit der anderen Hand die Einstellung der Rückenlehne zu erfolgen hat.

Die WO 20178160144 A1 beschreibt einen Sitz für einen Kinderwagen, umfassend ein Fahrgestell, eine Sitzfläche und eine Rückenlehne. Zwar befindet sich dabei die Entriegelung der Rückenlehnenverstellung an der Rückseite der Rückenlehne, so dass hier eine Verstellung ggf. auch mit einer einzigen Hand möglich ist. Allerdings erfolgt die Arretierung dabei wiederum mittels einer Klemmung, was auf Dauer unzuverlässig ist. Darüber hinaus erstreckt sich ein Teil der Verstelleinrichtung, nämlich ein elastisches Band, außerhalb des Gehäuses und verläuft entlang der gesamten Rückseite des Sitzes, was die Gesamtanordnung erheblich kompliziert.

Weitere derartige Vorrichtungen sind in der EP 2 878 513 A2, in der GB 2 178 306 A, in der JP 2003 095113 A, in der US 2006/006629 A1 und in der EP 0 479 132 A1 offenbart.

Aus den Nachteilen des beschriebenen Standes der Technik resultiert das die Erfindung initiierende Problem, eine gattungsgemäße Vorrichtung derart weiterzubilden, dass zur Verstellung des Abstandes oder der Neigung eines Objekts gegenüber einer Konstruktion nur wenige, kurze bzw. schnelle Handgriffe erforderlich sind; dabei soll die Vorrichtung dauerhaft zuverlässig sein und möglichst einfach im Aufbau, in der Montage und in der Bedienung.

Die Lösung dieses Problems gelingt durch die Merkmale des Anspruchs 1. Bevorzugte Weiterbildungen sind in den abhängigen Ansprüchen definiert. Offenbart wird ein Zugmittel, welches wenigstens ein in seiner Länge verstellbares Trum aufweist, das im Bereich eines seiner Enden mit der Konstruktion und im Bereich seines anderen Endes mit dem zu verstellenden Objekt verbunden ist und bei der Verstellung der Tendenz unterliegt, selbsttätig verkürzt zu werden, wobei im Rahmen der Vorrichtung eine Arretierung einer eingestellten Länge des verstellbaren Trums vorgesehen ist, die mittels formschlüssig ineinander greifender Elemente bewirkt wird.

Da aufgrund dieser Maßnahme anstelle eines Getriebes ein Zugmittel zur Aufnahme von Kräften verwendet wird, vereinfacht sich einerseits die Gesamtanordnung, und außerdem ist es nicht erforderlich, eine Selbsthemmung vorzusehen, so dass auch eine kräftemäßige Übersetzung entbehrlich ist. Im Verstellungsmodus sorgt die Tendenz zur selbsttätigen Verkürzung wenigstens eines freien Trums des Zugmittels dafür, dass zwei Handhabungen für eine Verstellung völlig ausreichend sind, nämlich die Anwahl des Verstellungmodus einerseits sowie die Vorgabe der gewünschten Höhe oder des gewünschten Abstandes oder der gewünschten Neigung eines Objekts gegenüber einer Konstruktion andererseits. Diese beiden Handhabungen können in vielen Fällen gleichzeitig mit nur einer Hand vorgenommen werden.

Demzufolge kann eine Verstelleinrichtung ersetzt werden durch eine Einstelleinrichtung, mit deren Hilfe die Höhe, Neigung oder der Abstand eines Objekts gegenüber einer Konstruktion oder einem sonstigen Bauteil einmalig eingestellt und sodann ggf. arretiert werden kann, um diese Einstellung zu konservieren.

Vorgesehen ist, dass im Rahmen einer gattungsgemäßen Vorrichtung zur Verstellung der Höhe oder des Abstandes oder der Neigung eines Objekts gegenüber einer Konstruktion, mit welcher es verschiebbar oder schwenkbar verbunden ist, eine Einstelleinrichtung vorgesehen ist, welche in einem bestimmten, vorzugsweise manuell auswählbaren Systemzustand eine Einstellung des Höhen-, Neigungs- oder Abstandsparameters möglich ist, in einem anderen Systemzustand dagegen nicht, während dann der zuletzt eingestellte Höhen-, Neigungs- oer Abstansparameter arretiert bzw. konserviert wird.

Infolge dieser Abkehr der Erfindung von einem Verstellgetriebe ist weder eine Getriebeübersetzung noch eine Selbsthemmung erforderlich. Deshalb lässt sich die Einstelleinrichtung derart gestalten, dass der Höhen-, Neigungs- oder Abstandsparameter mit wenigen, kurzen Hangriffen einstellbar ist.

Die mittels formschlüssig ineinander greifender Elemente bewirkte Arretierung einer eingestellten Länge des verstellbaren Trums ist im Gegensatz zu einer Klemmung dauerhaft stabil und neigt im Gegensatz zu einer Klemmung nicht zu einem allmählichen Durchrutschen.

Das Zugmittel sollte eine langgestreckte, biegsame Gestalt aufweisen. Bei diesem Zugmittel handelt es sich also beispielsweise um einen Riemen, einen Faden, eine Schnur oder um ein Band, einen Draht oder eine Litze, oder auch um eine Kette, etc. Allen derartigen Zugmitteln gemeinsam ist, dass sich damit Zugkräfte übertragen lassen, andere Kräfte wie Druck-, Scher- oder Biegekräfte jedoch nicht. Demzufolge lässt sich mit einer derartigen Einrichtung eine Höhen-, Neigungs- oder Abstandsposition nur in einer Richtung vorgeben, während für eine Vorgabe auch in der anderen Richtung beispielsweise eine zweite, antiparallel ausgerichtete Einrichtung erforerlich wäre. Oftmals ist dies jedoch nicht erforderlich, wenn nämlich infolge einer vorgegebenen besonderen Funktionsweise nur Kräfte in einer einzigen Richtung auftreten können. Beispielsweise wird eine Rückenlehne im Normalzustand durch den Druck eines anliegenden Rückens stets nach hinten gedrückt, so dass die Neigungsposition nur gegenüber einem weiteren Verschwenken nach hinten vorgegeben werden muss, gegenüber einem Verschwenken nach vorne dagegen nicht. Daher ist ein Zugmittel ausreichend, wodurch die Gesamtanordnung sehr übersichtlich wird.

Es hat sich als günstig erwiesen, dass die Tendenz zur selbsttätigen Verkürzung des verstellbaren Trums durch ein innerhalb der Vorrichtung angeordnetes Federelement bewirkt wird, welches mit dem das verstellbare Trum bildenden Zugmittel nicht unmittelbar verbunden bzw, gekoppelt ist, also im Sinne einer unmittelbaren Kraftübertragung, sondern vielmehr bzw. nur durch Vermittlung eines zusätzlichen, beweglichen oder beweglich gelagerten Zwischenelements, in welches während der Arretierung ein anderes Element formschlüssig eingreift, um eine Bewegung des Zwischenelements zu blockieren und damit die eingestellte Länge des verstellbaren Trums zu fixieren. Im Gegensatz zu einem Zugmittel oder zu einem Federelement lässt sich an einem eigens geschaffenen Verbindungsmittel bzw. Zwischenelement eine für einen Formschluss geeignete Gestaltung vorsehen. Dabei ist im Sinne der Erfindung mit dem Begriff "Formschluss" gemeint, dass sich im arretierten Zustand ein Element im Bewegungsbereich eines anderen Elements befindet und dadurch dessen Bewegung im Weg ist.

Die Erfindung erlaubt eine Weiterbildung dahingehend, dass das zusätzliche, bewegliche oder beweglich gelagerte Zwischenelement als Wickelkörper ausgebildet ist, auf welchen zumindest ein Teil des Zugmittels aufwickelbar ist, derart, dass das wenigstens eine in seiner Länge verstellbare Trum durch einen nicht auf den Wickelkörper aufgewickelten Bereich des Zugmittels gebildet wird. Hierbei handelt es sich um eine einfache Methode der Längenverstellung. Wenn das Zugmittel an oder in dem Wickelkörper fixiert ist, so kann sich das freie Ende nicht gegenüber der Oberfläche des Wickelkörpers verschieben und ist dadurch in der Lage, Zugkräfte aufzunehmen und diese an den Wickelkörper weiterzugeben.

Das Zugmittel kann einfach auf den Wickelkörper aufgewickelt werden, beispielsweise indem es mit einem Ende am Wickelkörper fixiert ist und von dort ausgehend um den Wickelkörper gewickelt wird. Der nicht aufgewickelte Abschnitt des Zugmittels bildet sodann ein Trum, das in seiner Länge verstellbar ist, je nachdem wie weit der Wickelkörper gedreht wird, um das Zugmittel aufzuspulen. Bei einer solchen Anordnung wird das freie Trum bei jeder Drehung des Wickelkörpers um die einfache Länge des Umfangs des Wickelkörpers verkürzt.

Andererseits besteht auch die Möglichkeit, das Zugmittel doppelt um den Wickelkörper zu schlingen und bei dessen Umdrehung jeweils doppelt aufzuwickeln, also derart, dass zwei in ihrer Länge verstellbare Trume durch die nicht auf den Wickelkörper aufgewickelten Bereiche des Zugmittels gebildet werden. In diesem Fall müsste ein mittlerer Bereich des Zugmittels an oder in dem Wickelkörper fixiert werden, und die beiderseits anschließenden Bereiche des Zugmittels werden dann beide sozusagen doppelt genommen und aufgewickelt, und jeder der beiden nicht um den Wickelkörper geschlungenen Bereiche wirkt dann als ein längenverstellbares Trum. Der Vorteil davon ist, dass zwei in ihrer Länge gleichsinnig bzw. synchron verstellbare Trume vorhanden sind, welche an verschiedenen Orten des jeweils anderen Objekts festlegbar sind.

Darüber hinaus können auch zwei oder mehr Zugmittel verwendet und derart auf den Wickelkörper aufgewickelt werden, dass insgesamt zwei oder mehr in ihrer Länge verstellbare Trume durch die nicht auf den Wickelkörper aufgewickelten Bereiche der zwei oder mehr Zugmittel gebildet werden. Bei vier Trumen können diese beispielsweise an den vier Ecken einer Platte, beispielsweise eines Tischs, befestigt werden.

Für eine synchrone Verstellung zweier Trume ist es wichtig, dass dieselben in dem gleichen Drehsinn auf den Wickelkörper aufgewickelt sind, so dass beide je nach Drehrichtung des Wickelkörpers zugleich aufgewickelt werden oder zugleich abgewickelt werden.

Wenn zwei Trume diametral von dem Wickelkörper wegstreben oder in diametrale Richtungen umgelenkt sind, so erhält man einen zu einer Mittelebene symmetrischen Verlauf der beiden Trume, und diese können dann in entgegengesetzten Richtungen zu zwei einander gegenüber liegenden Kanten eines verstellbaren Objekts geführt werden, oder zu voneinander entfernten Verankerungen an einer Konstruktion.

Die Erfindung sieht weiterhin vor, dass das oder die Zugmittel durch Öffnungen in dem Umfang des Wickelkörpers nach innen geführt ist (sind) und im Inneren des Wickelkörpers verankert ist (sind). Dort wirkt sich eine Klemm- oder sonstige Verankerungsmechanik nicht störend auf den Wickelvorgang aus.

Der Wickelkörper sollte eine rotationssymmetrische Gestalt aufweisen, insbesondere die Gestalt einer Kreisscheibe. Eine solche Form begünstigt ebenfalls ein gleichmäßiges Auf- und Abwickeln auf den bzw. von dem Wickelkörper.

Eine Ausbildung des Wickelkörpers derart, dass sein Umfang einen - in Längsrichtung seiner Rotationsachse gesehen - mittleren, im Durchmesser reduzierten Bereich aufweist, der an einer oder beiden Stirnseiten durch einen radial erweiterten Bereich begrenzt wird, wirkt dann wie eine Wickeltrommel, wobei das (die) Trum(e) um den verjüngten Bereich gewickelt wird und von den radial erweiterten Bereichen von einem Harabrutschen zurückgehalten wird.

Um eine gleichförmige, möglichst präzessionsfreie Drehbewegung des Wickelkörpers zu ermöglichen, sollte dieser um seine Rotationssymmetrieachse drehbar gelagert sein, insbesondere an einem Chassis oder an einem den Wickelkörper umgebenden Gehäuse. Je nach der Gestalt des Wickelkörpers kann hierfür eine einzige Lagerstelle ausreichend sein, insbesondere wenn der Wickelkörper eine eher scheibenförmige Form hat, oder die Lagerung erfolgt an zwei in Richtung der Rotationsachse gegeneinander versetzten Lagerstellen - eine solche Ausführungsform ist eher bei einem trommelförmigen Wickelkörper, also mit einer ausgeprägt dreidimensionalen Erstreckung zu empfehlen.

Weitere Vorteile ergeben sich dadurch, dass der Wickelkörper durch eine Feder in eine Drehrichtung vorgespannt ist, insbesondere in Aufwickelrichtung der (des) Zugmittel(s). Infolge der dadurch verursachten Tendenz, permanent einen maximal großen Abschnitt des Zugmittels aufspulen zu wollen, wird das wenigstens eine frei bleibende Trum des Zugmittels permanent unter Zugspannung gehalten, folgt daher beständig einer möglichst geraden Linie und ist auch permanent in der Lage, eine auf das verstellbare Objekt einwirkende Kraft in Richtung einer Dehnung des Zugmittels entgegenzuwirken.

Es ist die Feder als Spiralfeder ausgebildet. Eine solche Ausführungsform hat den Vorteil, dass dann die beiden Enden der Feder in der gemeinsamen Federebene liegen und demnach ein Gehäuse oder Chassis von Biege- oder Verwindungskräften frei ist.

Die Feder oder Spiralfeder ist - insbesondere aus Platzgründen - innerhalb des Wickelkörpers angeordnet. Dabei lässt sich in einem scheibenförmigen Wickelkörper aufgrund ihrer geometrischen Ähnlichkeit besonders eine Spiralfeder unterbringen, während in einem trommelförmigen Wickelkörper auch beispielsweise eine Schraubenfeder Platz findet.

Um eine angewählte Drehstellung fixieren zu können, sieht die Erfindung vor, dass der Wickelkörper mit einer Arretierungseinrichtung versehen ist, bei dessen Aktivierung eine weitere Drehung des Wickelkörpers blockiert ist, vorzugsweise in beiden Drehrichtungen, zumindest aber in derjenigen Drehrichtung, in welcher bei Spannung des freien Trums des Zugmittels ein Drehmoment einwirkt und also aufzunehmen ist.

Um eine angewählte Drehstellung arretieren zu können, ist es erforderlich, ein einwirkendes Drehmoment aufnehmen und ableiten zuu können; hierfür ist in besonderer Weise ein Formschluss geeignet, welcher insbesondere dann möglich ist, wenn der Wickelkörper eine ganz oder teilweise rundum laufende Zahnreihe aufweist. Hierbei gibt es unterschiedliche Zahnformen: Bei einer Zahnform ähnlich eines Zahnrades verlaufen beide Flanken eines Zahns relativ steil, also nahezu in einer radialen Ebene, so dass große Drehmomente übertragen werden können; andererseits kann nicht erfindungsgemäß die Zahnform auch nach Art eines Sägezahns gestaltet werden, mit einer steilen Flanke und einer flachen Flanke. Dann lassen sich in einer Drehrichtung höhe Drehmomente übertragen, während in der anderen Drehrichtung - jedenfalls bei einer geringen Bewegungsfreiheit eines der ineinandergreifenden Objekte in radialer Richtung - an der flach geneigten Flanke des Sägezahns ein Anlaufen möglich ist, mithin keine oder nur geringe Drehmomente übertragen werden können.

Mit einer derartigen Zahnreihe kann ein an einem Chassis oder Gehäuse der Vorrichtung vorgesehenes Eingriffselement zusammenwirken, weches geeignet ist, in die Zahnreihe des Wickelkörpers einzugreifen, um eine Drehung des Wickelkörpers zu blockieren. Hierzu weist das Eingriffselement einen Eingriffsbereich auf, welcher als Pendant zu einem oder mehreren Zähnen der Zahnreihe gestaltet ist.

Bevorzugt weist das Eingriffselement in seinem Eingriffsbereich einen oder mehrere Zähne auf. Selbst wenn jene im seitlichen Profil nicht exakt mit einer Lücke der Zahnreihe korrespondieren, sind sie dennoch in der Lage, sich mit der Zahnreihe zu verzahnen und damit eine weitere Drehung des Wickelkörpers zu verhindern.

Um eine durch einen solchen Zahneingriff resultierende Blockierung der Drehung des Wickelkörpers auch aufheben zu können, sollte das Eingriffselement in Richtung zu der Zahnreihe des Wickelkörpers hin oder von dieser weg verschiebbar sein. Wird es von der Zahnreihe entfernt, so ist der Wickelkörper frei drehbar; in gegen die Zahnreihe vorgeschobenem Zustand wird dessen Drehung blockiert. Eine Verschiebung wird beispielsweise ermöglicht durch wenigstens ein an dem Chassis oder Gehäuse der Vorrichtung angeordnetes Führungselement für das Eingriffselement. Dabei kann es sich beispielsweise um ein Profil handeln, welches das Eingriffselement an mehreren Seiten umgreift und dadurch in Längsrichtung des Profils führt.

Bevorzugt ist das Eingriffselement in einer Richtung zu der Zahnreihe des Wickelkörpers hin vorgespannt, so dass es in ansonsten kräftefreiem Zustand in Richtung zu der Zahnreihe hin gezogen oder gedrückt wird und sein Eingriffsbereich in die Zahnreihe an dem Wickelkörper eingreift, um jenen drehbewegungsmäßig zu blockieren. Mit anderen Worten, wenn nicht von außen aktiv auf das Eingriffselement eingewirkt wird, gelangt dieses selbsttätig in den Arretierungszustand, wodurch der einmal eingestellte Höhen-, Neigungs- oder Abstandswert dauerhaft erhalten bleibt, theoretisch zeitlich unbegrenzt.

Die Erfindung, das Eingriffselement durch wenigstens eine Feder vorzuspannen. Bei einer Feder handelt es sich um ein passives mechanisches Element, welches keine Hilfsenergie benötigt und daher seine Aufgabe dauerhaft erfüllen kann.

Diese wenigstens eine Feder zur Vorspannung des Eingriffselements kann durch eine Zug- oder Druckfeder gebildet werden, insbesondere durch eine Schraubenfeder. Dazu ist es förderlich, wenn die Längsachse der Schraubenfeder parallel zu der geführten Verschieberichtung des Eingriffselements ist.

Schließlich entspricht es der Lehre der Erfindung, dass das Eingriffselement mit einem Betätigungselement versehen ist, das aus einem Gehäuse herausragt. An diesem Betätigungselement ist es möglich, die Arretierung zu lösen, insbesondere manuell, indem damit das Eingriffselement gegenüber der Zahnreihe des Wickelkörpers zurückgezogen wird bzw. von der Zahnreihe weg. Nach Loslassen wird es dann durch seine eingebaute Vorspannungsfeder selbsttätig wieder in den Arretierungszustand vorgeschoben. Da an dem Betätigungselement vorzugsweise eine Zugkraft manuell aufgebracht werden muss, kann dieses eine Hinterschneidung aufweisen, beispielsweise als Lasche mit einer quer zu seiner Verschieberichtung orientierten Durchbrechung versehen sein. Alternativ oder kumulativ dazu ist es auch möglich, wenigstens einen Oberflächenbereich des Betätigungselements mit einer Profilierung zu versehen oder aufzurauen.

Weitere Merkmale, Einzelheiten, Vorteile und Wirkungen auf der Basis der Erfindung ergeben sich aus der folgenden Beschreibung einer bevorzugten Ausführungsform der Erfindung sowie anhand der Zeichnung. Hierbei zeigt:

Fig. 1     eine Rückenlehne, beispielsweise eines Kinderwagens, in schematischer Darstellung, mit einer erfindungsgemäßen Vorrichtung zur Veränderung der Neigung dieser Rückenlehne, welche ein manuell bewegbares
Betätigungselement aufweist;

Fig. 2     einen Schnitt durch die Verstellvorrichtung aus Fig. 1 entlang einer Mittelebene derselben, die von der Bewegungsrichtung des Betätigungselements einerseits und einer Symmetrieachse der Verstellvorrichtung andererseits aufgespannt wird; sowie

Fig. 3     einen Schnitt durch die Verstellvorrichtung aus Fig. 1 entlang einer Ebene, die parallel zu einer Grund- oer
Montagefläche der Verstellvorrichtung ist.

In der Zeichnung ist eine Vorrichtung 1 zur Höhen-, Neigungs- oder Abstandsverstellung eines Objektes 2 dargestellt, die beispielhaft für die Neigungsverstellung einer Rückenlehne 3 eines Kinderwagens eingesetzt ist.

Natürlich lassen sich mit einer solchen oder einer gleichartigen Vorrichtung 1 bzw. Anordnung bei entsprechender Adaption auch andere Objekte 2 hinsichtlich ihrer Neigung und/oder ihres Abstandes gegenüber einer Konstruktion oder hinsichtlich ihrer Höhe verstellen lassen, beispielsweise eine zu einer Tischplatte herabklappbare Frontseite eines Sekretärs, eine ausschwenk- oder ausziehbare Markise, aber auch ein versenkbares Schiebefenster, etc. Insofern soll der dargestellte Anwendungsfall nur als ein Beispiel verstanden werden.

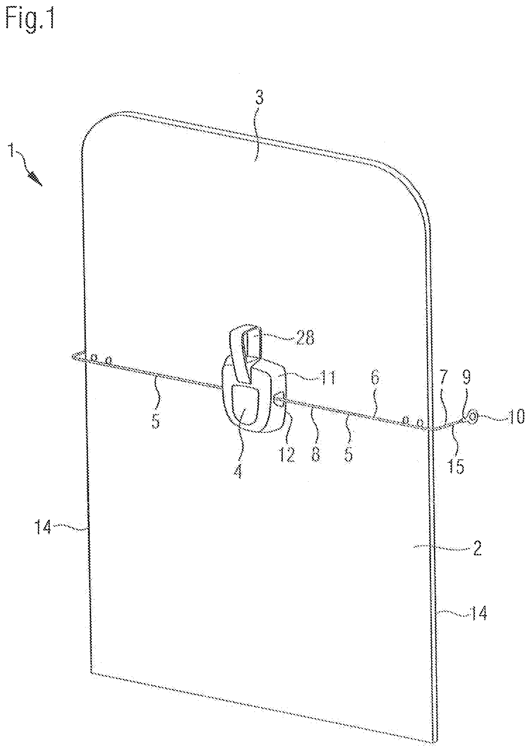

Wie man aus Fig. 1 entnehmen kann, verfügt die erfindungsgemäße Vorrichtung 1 über ein Gehäuse 4, aus welcher ein oder mehrere Trume 5 eines Zugmittels 6 austreten.

Das Zugmittel 6 kann beispielsweise aus einem Faden, einem Seil oder einem Draht bestehen. Wichtig ist, dass es im Hinblick auf Verformungen quer zu seiner Längsrichtung flexibel sein soll, dagegen für Verformungen, insbesondere Dehnungen, in seiner Längsrichtung möglichst invariant sein, also vorzugsweise nicht elastisch dehnbar. Ein typisches Beispiel hierfür könnte ein Nylonseil sein, wie man es auch als Drachenschnur verwendet, um Drachen steigen zu lassen.

Bevorzugt besteht jedes Trum 5 aus dem gleichen Material. Die in Fig. 1 erkennbaren beiden Trume 5 können entweder von dem selben Zugmittel 6 stammen oder von zwei unterschiedlichen Zugmitteln 6, die dann vorzugsweise jedoch aus dem selben Material gefertigt sind.

Wie man Fig. 1 weiter entnehmen kann, verfügt jedes Trum 5 über zwei Enden 7, 8, von denen eines frei endet und beispielsweise mit einem Verbindungs- oder Befestigungsmittel 9 versehen sein kann, insbesondere in Form einer Öse 10. Mittels einer solchen Öse 10 kann das betreffende, freie Ende 7 an einer in Fig. 1 nicht dargestellten Konstruktion befestigt, beispielsweise angeschraubt werden. Eine derartige Konstruktion könnte bei einem Kinderwagen beispielsweise dessen Chassis oder Rahmen sein. Im Allgemeinen sind jedoch vielfältige Konstruktionen verwendbar.

Das andere Ende 8 mündet durch je eine Öffnung 11 in das Gehäuse 4 der Vorrichtung 1. Das Gehäuse 4 der Vorrichtung 1 wird beispielsweise mit seiner Unterseite 12 an dem zu verstellenden Objekt 2, bzw. im vorliegenden Fall an der Rückenlehne 3 befestigt, bevorzugt angeschraubt.

Innerhalb des Gehäuses 4 befindet sich eine Mechanik 13, mit der sich die freie Länge der Trume 5 beeinflussen lässt. Wie man aus Fig. 1 erkennen kann, hat die Länge eines an einer anderen Konstruktion festgelegten Trums 5 unmittelbaren Einfluss auf den Abstand oder Neigungswinkel des Objektes 2 oder der Rückenlehne 3 gegenüber einer anderen Konstruktion.

Denn da die Entfernung einer Seitenkante 14 der Rückenlehne 3 von dem Gehäuse 4 der Vorrichtung 1 konstant ist, hat eine Änderung der freien Länge des Trums 5 unmittelbaren Einfluß auf die Länge des distalen Abschnitts 15 des Zugmittels 6 zwischen dem Befestigungsmittel bzw. der Öse 10 einerseits und der Seitenkante 14 der Rückenlehne 3 andererseits.

Dieser distale Abschnitt 15 ist jedoch proportional zu dem betreffenden Abstand zwischen dem Objekt 2 oder der Rückenlehne 3 einerseits und einer anderweitigen Konstruktion andererseits, an welcher die Öse 10 festgelegt ist.

Sofern das Objekt 2 bzw. die Rückenlehne 3 über ein in Fig. 1 nicht dargestelltes Gelenk, bspw. im Bereich zwischen der Rückenlehne 3 und der betreffenden Sitzfläche od. dgl., mit der betreffenden Konstruktion verbunden ist, kann sich deren Abstand zu einer Konstruktion nur in einem von diesem Gelenk beabstandeten Bereich verändern, und daher erfährt die Rückenlehne 3 eine Neigungsverstellng um die betreffende Verbindungsachse.

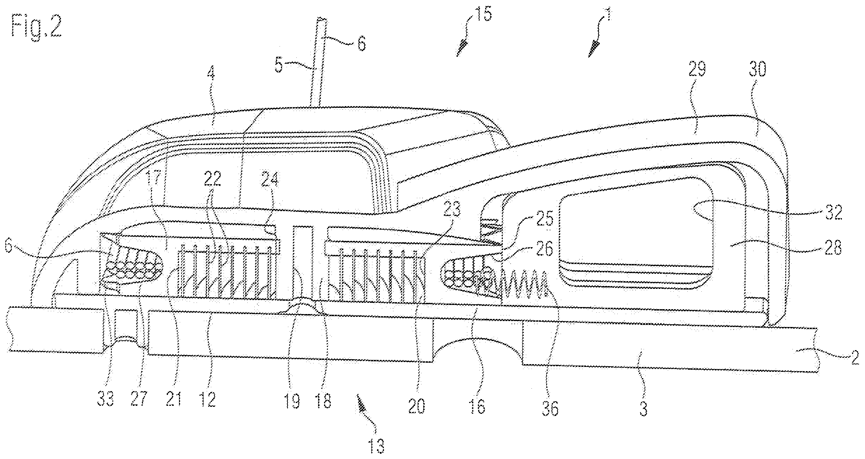

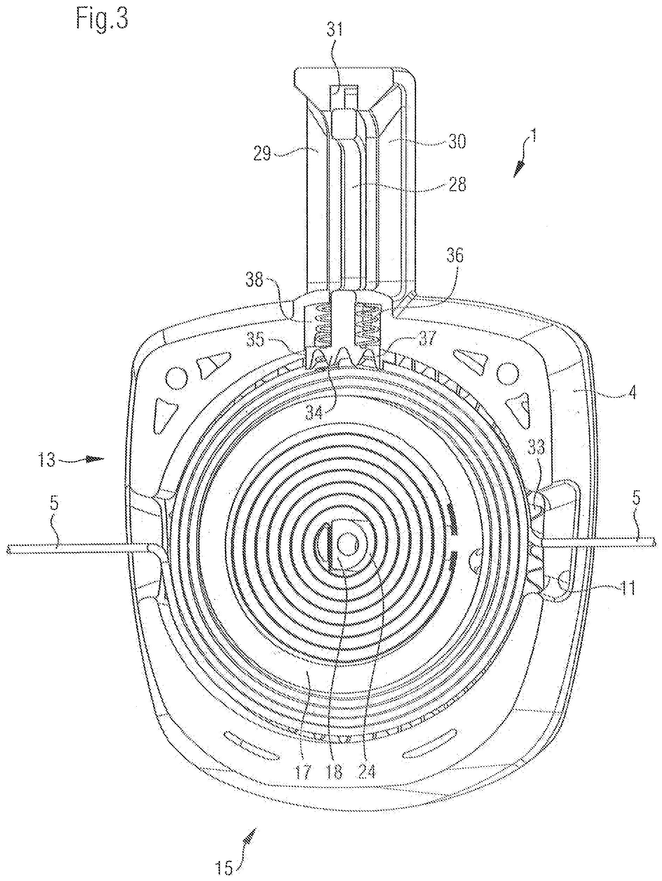

Der innere Aufbau der zur Längenverstellung verwendeten Mechanik 13 innerhalb des Gehäuses 4 ist in den Figuren 2 und 3 beispielhaft zu sehen.

Man erkennt, dass die Mechanik 13 oben durch das Gehäuse 4 abgedeckt ist, unten dagegen von einer Bodenplatte 16.

Ein zentraler Bestandteil dieser Mechanik 13 ist ein rotationssymmetrisches Teil, insbesondere in Form eines als Wickelkörper 17 dienenden Flachkörpers, der an einer zentralen Achse 18 drehbar gelagert ist, welche sich ihrerseits von dem Gehäuse-Oberteil 4 nach innen erstreckt.

Wie man der Fig. 2 weiter entnehmen kann, ist es möglich, diese Achse 18 mit einem zentralen, langgestreckten Hohlraum 19 auszubilden, so dass es einer Schraube möglich ist, sich durch die Bodenplatte 16 hindurch bis in diesen Hohlraum 19 hinein zu erstrecken, wo es zu diesem Zweck beispielsweise ein zu dem Gewinde der Schraube passendes Innengewinde geben kann.

Die Fig. 2 lässt weiter erkennen, dass der rotationsförmige Wickelkörper 17 nicht massiv ausgebildet ist, sondern einen die Achse 18 umgebenden Hohlraum 20 aufweist. Auch dieser Hohlraum 20 hat bevorzugt eine rotationsförmige, flache Gestalt.

Dieser Hohlraum 20 dient der Aufnahme einer Spiralfeder 21, die in Fig. 2 im Querschnitt dargestellt ist; bei der Fig. 3 ist die Bodenplatte 16 entfernt, so dass man auf die Stirnseite der Feder 21 sehen kann und deren einzelne Windungen 22 erkennen kann.

Die Feder 21 hat insgesamt nur zwei Enden, nämlich eines an der äußeren Oberfläche der spiralförmig aufgewundenen Feder 21 bzw. an der Innenseite 23 des Hohlraums 20, und eines an der Innenseite der spiralförmig aufgewundenen Feder 21 bzw. an der äußeren Mantelfläche 24 der zentralen Achse 18.

Also ist ein Ende der Feder 21 an der Innenseite 23 des Hohlraums 20 festgelegt, das andere Ende an der Außenseite 24 der Achse 18. Eine solche Anordnung hat zur Folge, dass die Feder 21 bestrebt ist, einen bestimmten Drehwinkel zwischen dem rotationssymmetrischen Wickelkörper 17 einerseits und der zentralen Achse 18 bzw. dem Gehäuse 4 der Vorrichtung 1 andererseits einzuhalten.

In Fig. 2 ist zu sehen, dass an der äußeren Mantelfläche 25 des Wickelkörpers 17 eine rundum laufende Vertiefung 26 vorgesehen ist, insbesondere in Gestalt einer vollständig umlaufend ausgebildeten Nut 27.

Wie man der Fig. 3 besonders gut entnehmen kann, sind die beiden Trume 5 des Zugmittels 6, nachdem sie durch jeweils eine von zwei einander diametral gegenüber liegend angeordneten Öffnungen 11 in den Innenraum des Gehäuses 3 eingetreten sind, um die genutete Mantelfläche 25 des Wickelkörpers 17 geschlungen bzw. auf jene aufgewickelt. Damit die Trume 5 bzw. das/die Zugmittel 6 dabei nicht von der betreffenden Mantelfläche 25 herabrutschen können, ist dort die oben erwähnte Nut 27 bzw. rundum laufende Vertiefung 26 eingearbeitet, welche die aufgespulten Trume 5 aufnimmt.

Die Wirkungsweise dieser Mechanik 13 ist wie folgt:

Wenn man annimmt, dass die freien Trume 5 stets straff gespannt sind und beide jeweils die gleiche freie Länge l haben, und ferner der Wickelkörper 17 im Bereich seiner Nut 27 bzw. seiner rundum laufenden Vertiefung 26 einen Radius r aufweist, mithin einen Umfang $U = 2 * \pi * r$, so gilt unter der weiteren Voraussetzung, dass die beiden Trume 5 von dem selben Zugmittel 6 der Gesamtlänge $L_2$ gebildet werden, das im Bereich seiner Mitte an dem Wickelkörper 17 festgelegt ist, während seine freien Enden 7 je ein Trum 5 bilden:

$$L_2 = 2 * l + \pi * r + 4 * \pi * r * |\alpha| / 360° = \text{const.},$$

wobei a der Drehwinkel des Wickelkörpers 17 gegenüber seiner Position ist, in welcher die Trume 5 weder in der einen Richtung noch in der anderen Richtung aufgespult sind. Durch Bildung des Absolutbetrages $|\alpha|$ wird berücksichtigt, dass das Zugmittel 6 grundsätzlich in beiden Drehrichtungen auf das Zugmittel 19 aufgespult werden kann.

Der Faktor 4 berücksichtigt dabei die Tatsache, dass bei einer Drehung immer beide Trume 5 aufgewickelt werden; also bei einer Drehung des Wickelkörpers 17 um genau 360° die Summe der beiden Trume 5 des Zugmittels 6 sich insgesamt um den doppelten Umfang U des Wickelkörpers 17 verkürzt.

Der Term $\pi * r$ beschreibt die Tatsache, dass das Zugmittel 6 um einen Winkel von 180° um den Wickelkörper 17 herumgeführt werden muss, weil die beiden Öffnungen 11 in dem Gehäuse 4 einander ja diametral gegenüber liegen.

Bei zwei aus einem gemeinsamen Zugmittel 6 gebildeten Trumen 5 beschreibt die Länge I dann die Länge des freien, d.h. von dem Flachkörper 6 abgelösten Abschnitts eines Trums 5, die bei dessen idealerweise gerade gestrecktem Verlauf leicht gemessen werden kann als der Abstand der Ösen 10 zu der Mantelfläche 25 des Wickelkörpers 17, d.h., es gilt:

$$l = L_2 / 2 - \pi * r / 2 - 2 * \pi * r * |\alpha| / 360°.$$

Wird für jedes Trum 5 ein eigenes Zugmittel 6 der Länge $L_1$ verwendet, das mit einem Ende an dem Wickelkörper 17 befestigt ist, so kann der Term $\pi * r / 2$ entfallen, und außerdem wird pro Umdrehung nur ein Trum 5 aufgespult; dann gilt:

$$l = L_1 - 2 * \pi * r * |\alpha| / 360°.$$

Mit anderen Worten, je weiter der Wickelkörper 17 gedreht wird, um so größer wird der Drehwinkel a, aber um so kleiner wird die freie Länge I eines Trums 5.

Der maximale Drehwinkel $|\alpha_{max}|$ ist erreicht, wenn eines der Trume 5 vollkommen auf die äußere Mantelfläche 25 des Wickelkörpers 17 aufgespult ist, also wenn dessen freie Länge I gleich null ist:

$$l = (L_2 - \pi * r) / 2 - 2 * \pi * r * |\alpha_{max}| / 360° = 0,$$

$$2 * \pi * r * |\alpha_{max}| / 360° = (L_2 - \pi * r) / 2,$$

$$|\alpha_{max}| = 360° * (L_2 - \pi * r) / (4 * \pi * r).$$

Ist aus einem Zugmittel 6 nur ein einziges Trum 5 gebildet, so erhält man:

$$|\alpha_{max}| = 360° * L_1 / (2 * \pi * r).$$

Indem vorzugsweise jede Öffnung 11 eine lichte Öffnung aufweist, deren Querschnitt zwar größer ist als der Querschnitt des Zugmittels 6, aber kleiner als der Querschnitt einer Öse 11 bzw. eines anderen endseitigen Befestigungsmittels 9, können diese Enden 7.8 nicht durch die Öffnungen 11 nach innen treten, was unter Umständen die Montage erleichtert.

Die Spiralfeder 21 soll derart vorgespannt sein, dass sie ihren vollkommen entspannten Zustand nicht bei dem Drehwinkel a = 0° einnimmt, sondern vorzugsweise bei einem Drehwinkel $|\alpha| \geq |\alpha_{max}|$, so dass der Wickelkörper 17 für alle denkbaren Drehwinkel $|\alpha| \leq |\alpha_{max}|$ stets in einer Drehrichtung vorgespannt ist und also bestrebt ist, die Trume 5 stets in einer vorgegebenen Drehrichtung vollständig auf den Wickelkörper 17 aufzuspulen, bis die Ösen 11 bzw. die endseitigen Befestigungsmittel 9 an den Rändern der Öffnungen 11 anstoßen würden.

Mit anderen Worten, die Spiralfeder 21 versucht stets, die Ösen 11 bzw. die endseitigen Befestigungsmittel 9 an das Gehäuse 4 heranzuziehen. Sofern diese Ösen 11 oder Befestigungsmittel 9 an einer Konstruktion festgelegt sind, wird zumindest erreicht, dass die Trume 5 zwischen dieser Konstruktion und dem Objekt 2 bzw. dem daran festgelegten Gehäuse 4 straff gespannt sind.

Erfindungsgemäß besteht nun jedoch die Möglichkeit, zwischen diesem straffenden Modus und einem anderen Modus zu wählen bzw. umzuschalten, bei in dem anderen Modus die freie Länge I eines Trums 5 konstant bleibt. Dies kann dadurch erreicht werden, dass die Wirkung der Spiralfeder 21 kompensiert wird, und dies kann insbesondere dadurch erfolgen, indem eine Drehung des Wickelkörpers 17 relativ zu dem Gehäuse 4 unterbunden wird.

Diesem Zweck dient ein Betätigungselement 28, welches aus dem Gehäuse 4 der Vorrichtung 1 herausragt und also frei zugänglich ist. Es ermöglicht die Auswahl zwischen einem Einstellmodus, in welchem die Spiralfeder 21 aktiv ist, aber die Drehung des Wickelkörpers 17 nicht gehemmt ist, so dass sich die Höhe oder die Neigung oder der Abstand des Objekts 2 gegenüber einer Konstruktion bei gestrafften Trumen 5 einstellen lässt, einerseits sowie andererseits einem Arretier- oder Benutzungszustand, in welchem eine eingestellte freie Länge l der Trume 5 konstant gehalten wird, indem eine weitere Drehung des Wickelkörpers 17 gehemmt ist, damit die zuletzt eingestellte Höhe oder Neigung oder ein zuletzt eingestellter Abstand des Objekts 2 gegenüber einer Konstruktion erhalten bleibt und der betreffende Gegenstand in seiner üblichen Funktion verwendet werden kann; eine Rückenlehne 3 beispielsweise zum Anlehnen.

Das Betätigungselement 28 ist innerhalb des Gehäuses 4 verschiebbar geführt, insbesondere in einer Richtung radial zu der zentralen Achse 18. Wie man aus Fig 2 etnehmen kann, verfügt das Gehäuse 4 über einen seitlichen Ansatz 29, der nach Art eines Bügels 30 gestaltet und also von zwei Seiten her offen ist. Die innere Länge dieses Ansatzes 29 oder Bügels 30 ist etwas größer als die Länge des Betätigungselements 28, woraus sich dessen Verschiebbarkeit in radialer Richtung bezüglich der zentralen Achse 18 ergibt.

Wie man aus Fig. 3 weiter erkennen kann, verfügt der Ansatz 29 oder Bügel 30 zudem über eine an seiner Innenseite angeordneten Führungsschlitz 31, worin das in diesem Bereich scheibenförmig ausgestaltete Betätigungselement 28 geführt beweglich aufgenommen ist.

Bevorzugt verfügt das Betätigungselement 28 über eine quer zu seiner Ebene durchgehende Öffnung 32, die bevorzugt größer ist als der Querschnitt eines menschlichen Fingers, so dass eine Person zwecks Auswahl des Einstellmodus diese Öffnung 32 mit einem Finger durchgreifen kann, um anschließend das Betätigungselement 28 zu verschieben.

Die eigentliche Auswahl zwischen zwei verschiedenen Betriebsmodi wird dadurch bewirkt, dass im Bereich der Mantelfläche 25 des Wickelkörpers 17 eine rundum laufende Verzahnung 33 vorgesehen ist, insbesondere neben der dortigen Nut 27 oder Vertiefung 26, also in Fig. 2 entweder oberhalb oder - bevorzugt - unterhalb derselben, d.h., in einem kürzeren Abstand zu der Unter- oder Montageseite 12 des Gehäuses 4 als die rundum laufende Nut 27 oder Vertiefung 26 in der Mantelfläche 25 des Wickelkörpers 17.

Der Innenraum in dem Gehäuse 4 ist derart groß bemessen, dass diese Verzahnung 33 darin keinerlei Hindernis vorfindet, so dass sich der Wickelkörper 17 frei drehen kann. Allerdings ist an dem der zentralen Achse 18 zugewandten Ende des Betätigungselements 28 wenigstens ein Zahn 34 oder eine kurze Zahnreihe 35 mit beispielsweise zwei oder mehr Zähnen 34 vorgesehen, welche in Richtung zu der zentralen Achse 18 vorspringen. Diese Zähne sind vorzugsweise hinsichtlich ihrer Größe und Geometrie derart ausgebildet, dass sie zu den Zähnen der rundum laufenden Verzahnung 33 an der Wickelkörper 17 kompatibel sind, also in jene Verzahnung 33 eingreifen können.

Dieser Verzahnungseingriff wird gesteuert durch die Position des Betätigungselements 19:
Ist das Betätigungselement 28 weit genug zu der Achse 18 hin verschoben, greifen seine Zähne 34 in die rundum laufende Verzahnung 33 des Wickelkörpers 17 ein; das in dem Führungsschlitz 31 gefangene Betätigungselement 28 kann sich selbst nicht um die Achse 18 drehen und erlaubt dies aufgrund weines Verzahnungseingriffs mit dem Wickelkörper 17 letzterem ebenfalls nicht; der Wickelkörper 17 ist in Drehrichtung arretiert.

Wird das Betätigungselement 19 dagegen von der Achse 18 weit genug entfernt, erreichen seine Zähne 34 die rundum laufende Verzahnung 33 des Wickelkörpers 17 nicht mehr, und es gibt keinen Verzahnungseingriff. Der Wickelkörper 17 ist frei und kann sich drehen, zumindest solange, bis insbesondere unter dem Einfluss der Spiralfeder 21 ein oder beide bzw. alle Trume 5 gespannt sind.

Allerdings sind nicht beide Endpositionen des Betätigungselements 28 gleichermaßen stabil ausgestaltet. Man erkennt in den Fig. 2 und 3 seitlich neben der Mittelebene des teilweise scheibenförmig ausgestalteten Betätigungselements 28 zwei Federn 36, deren Längsachsen parallel zu der geführten Verschieberichtung des Betätigungselements 28 sind, also etwa radial zu der Achse 18.

Wie man in Fig. 3 sieht, ist die Zahnreihe 35 des Betätigungselements 28 breiter als dessen rückwärtiger, scheibenförmiger und von außen zugänglicher Bereich. Um die radiale Beweglichkeit dieses die Zahnreihe 35 tragenden, verbreiterten Bereichs 37 zu gewährleisten, ist innerhalb des Gehäuses 4 eine Kammer 38 geschaffen, deren Querschnitt quer zu der zugelassenen radialen Verschieberichtung des Betätigungselements 28 ausreichend groß bemessenist, um dem verbreiterten Bereich 37 genügend Raum für eine radiale Verstellung zu geben.

Hinter der Zahnreihe 35 bzw. radial außerhalb des verbreiterten Bereichs 37 ist innerhalb dieser Kammer 38 Platz für die Federn 36. Diese sind als Druckfedern ausgebildet und stützen sich mit ihren radial äußeren Enden an dem Gehäuse 4 ab, sind also bestrebt, den die Zahnreihe 35 tragenden, verbreiterten Bereich 37 radial nach innen zu drücken, in Richtung zu der zentralen Achse 18.

Sobald man das Betätigungselement 28 loslässt, wird es daher von den Federn 36 radial nach innen gedrückt und der Eingriff der Zähne 34 mit der Verzahnung 33 am Außenumfang des Wickelkörpers 17 hergestellt, mithin der Flachkörper gegenüber weiteren Drehungen arretiert. Dies entspricht der Gebrauchsposition, in welcher die eingestellte freie Länge der Trume 5 sich nicht verändern kann. Wird nun das Objekt 2 - beispielsweise eine Rückenlehne 3 eines Sitzes - entgegen der Richtung der gespannten endseitigen Abschnitte 14 der Trume 5 von einer Konstruktion weg gedrückt, so sind die Trume 5 in dieser Arretierungsstellung in der Lage, die dabei auftretenden Kräfte aufzunehmen, ohne dass das Objekt 2 dieser äußeren Kraft nachgibt.

Zur Einstellung einer freien Länge l der Trume 5 wird das Betätigungselement 28 zunächst radial nach außen gezogen, bis der Wickelkörper 17 freigegeben wird und sich - nur noch unter dem internen Einfluss der Sprialfeder 21 - frei drehen kann.

Wird nun das betreffende Objekt 2, beispielsweise eine Rückenlehne 3, in ihre gewünschte Neigungsposition herabgedrückt, also von der Konstruktion weg, so gibt die Spiralfeder 21 die dafür benötigte Länge l der Trume 5 frei; ein anschließendes Loslassen des Betätigungselements 28 führt zur Arretierung dieser Position.

Wird andererseits bei Auswahl dieses Einstellmodus das Objekt 2, also beispielsweise eine Rückenlehne 3, nach oben gehoben bzw. zu einer Konstruktion hin verschoben, so spult die Spiralfeder 21 den nun überflüssigen Anteil des Trums 5 bzw. aller Trume 5 auf und strafft damit die Trume 5, so dass genau eine für die gewünschte Neigungsposition erforderliche feie Länge l zur Verfügung steht. Nach anschließendem Loslassen des Betätigungelements 28 drücken die Federn 36 dieses nach innen bis zum Verzahnungseingriff zwischen den Zähnen 34 und der Verzahnung 33 - das System merkt sich die eingestellte Neigungsposition und hält diese anschließend auch unter äußerlicher Druckbelastung konstant.

Bezugszeichenliste

| | | | |
|---|---|---|---|
| 1 | Vorrichtung | 26 | Vertiefung |
| 2 | Objekt | 27 | Nut |
| 3 | Rückenlehne | 28 | Betätigungselement |
| 4 | Gehäuse | 29 | Ansatz |
| 5 | Trum | 30 | Bügel |
| 6 | Zugmittel | 31 | Führungsschlitz |
| 7 | Ende | 32 | Öffnung |
| 8 | Ende | 33 | Verzahnung |
| 9 | Befestigungsmittel | 34 | Zahn |
| 10 | Öse | 35 | Zahnreihe |
| 11 | Öffnung | 36 | Feder |
| 12 | Unterseite | 37 | verbreiterter Bereich |
| 13 | Mechanik | 38 | Kammer |
| 14 | Seitenkante | | |
| 15 | distaler Abschnitt | | |
| 16 | Bodenplatte | | |
| 17 | Wickelkörper | | |
| 18 | Achse | | |
| 19 | Hohlraum | | |
| 20 | Hohlraum | | |
| 21 | Spiralfeder | | |
| 22 | Windung | | |
| 23 | Innenseite | | |
| 24 | Mantelfläche | | |
| 25 | Mantelfläche | | |

**Patentansprüche**

1. Vorrichtung (1) zur Verstellung der Höhe oder des Abstandes oder der Neigung eines Objekts (2) gegenüber einer Konstruktion, wenn es mit dieser verschiebbar oder schwenkbar gekoppelt ist, beispielsweise zur Verstellung der Neigung einer Rückenlehne (3) eines Kinderwagens gegenüber dessen Chassis, wobei die Kopplung des Objekts (2) mit der Konstruktion ein Zugmittel (6) umfasst, welches wenigstens ein in seiner freien Länge (I) verstellbares Trum (5) aufweist, das im Bereich eines seiner Enden (7) mit der Konstruktion verbindbar ist und im Bereich seines anderen Endes (8) mit der an dem zu verstellenden Objekt (2) festzulegenden Vorrichtung (1) verbunden ist und bei der Verstellung der Tendenz unterliegt, selbsttätig verkürzt zu werden, wobei im Rahmen der Vorrichtung (1) eine Arretierung einer eingestellten Länge (I) des verstellbaren Trums (5) vorgesehen ist, die mittels formschlüssig ineinander greifender Elemente bewirkt wird, wobei die Tendenz zur selbsttätigen Verkürzung des verstellbaren Trums (5) durch ein innerhalb eines Gehäuses (4) der Vorrichtung (1) angeordnetes Federelement in Form einer Spiralfeder (21) bewirkt wird, das mit dem das verstellbare Trum (5) bildenden Zugmittel (6) nicht unmittelbar verbunden ist, sondern vielmehr durch Vermittlung eines zusätzlichen Zwischenelements in Form eines rotationsförmigen, kreisscheibenförmigen, um eine zentrale Achse (18) des Gehäuses (4) drehbar gelagerten Wickelkörpers (17) mit einem Hohlraum (20), in dem die Spiralfeder (21) aufgenommen ist, wobei auf den Wickelkörper (17) zumindest ein Teil des Zugmittels (6) aufwickelbar ist, derart, dass das wenigstens eine in seiner Länge verstellbare Trum (5) durch einen nicht auf den Wickelkörper (17) aufgewickelten Bereich des Zugmittels (6) gebildet wird, **gekennzeichnet durch**

a) eine an der äußeren Mantelfläche (25) des Wickelkörpers (17) rundum laufende Verzahnung (33) mit Zähnen, deren beide Flanken relativ steil verlaufen wie bei einem Zahnrad, und

b) ein aus dem Gehäuse (4) heraus ragendes Betätigungselement (28), welches in einer radialen Richtung bezüglich der zentralen Achse (18) verschiebbar geführt ist und ein Eingriffselement mit einem Eingriffsbereich (37) mit einem oder mehreren Zähnen (34) umfasst, zum Eingriff in die Verzahnung (33) an der äußeren Mantelfläche (25) des Wickelkörpers (17), um während der Arretierung eine Bewegung des Wickelkörpers (17) zu blockieren und damit die eingestellte Länge (I) des verstellbaren Trums (5) zu fixieren,

c) wobei eine Einstellung der freien Länge des wenigstens einen Trums (5) nur möglich ist, wenn das Betätigungselement (28) mitsamt des Eingriffsbereichs (37) von der Achse (18) radial nach außen verschoben wird.

**2.** Vorrichtung (1) nach Anspruch 1, **dadurch gekennzeichnet, dass** das Zugmittel (6) einfach auf den Wickelkörper (17) aufwickelbar ist, so dass insgesamt ein in seiner Länge verstellbares Trum (5) durch den nicht auf den Wickelkörper (17) aufgewickelten Bereich des Zugmittels gebildet wird.

**3.** Vorrichtung (1) nach Anspruch 1, **dadurch gekennzeichnet, dass**

a) das Zugmittel (6) doppelt um den Wickelkörper (17) wickelbar ist, so dass zwei in ihrer Länge verstellbare Trume (5) durch nicht um den Wickelkörper (17) gewickelten Bereiche des Zugmittels (6) gebildet werden, oder dass

b) zwei oder mehr Zugmittel (6) auf den Wickelkörper (17) aufwickelbar sind, so dass zwei oder mehr in ihrer Länge verstellbare Trume (5) durch die nicht auf den Wickelkörper (17) aufgewickelten Bereiche der zwei oder mehr Zugmittel (6) gebildet werden.

**4.** Vorrichtung (1) nach Anspruch 3, **dadurch gekennzeichnet, dass** zwei Trume (5) in dem selben Drehsinn auf den Wickelkörper (17) aufgewickelt sind.

**5.** Vorrichtung (1) nach einem der Ansprüche 3 oder 4, **dadurch gekennzeichnet, dass** zwei Trume (5) diametral von dem Wickelkörper (17) wegstreben oder in diametrale Richtungen umgelenkt sind, insbesondere im Bereich der Ränder von Öffnungen (11) eines den Wickelkörper (17) umgebenden Gehäuses (4).

**6.** Vorrichtung (1) nach einem der vorhergehenden Ansprüche, **dadurch gekennzeichnet, dass** das oder die Zugmittel (6) an dem Umfang (25) des Wickelkörpers verankert sind oder durch Öffnungen in dem Umfang (25) des Wickelkörpers (17) nach innen geführt sind und im Inneren des Wickelkörpers (17) verankert sind.

**7.** Vorrichtung (1) nach einem der vorhergehenden Ansprüche, **dadurch gekennzeichnet, dass** der Umfang (25) des Wickelkörpers (17) einen im Durchmesser reduzierten Mittelbereich (26,27) aufweist, der an einer oder beiden Stirnseiten durch einen radial erweiterten Bereich begrenzt wird.

**8.** Vorrichtung (1) nach einem der vorhergehenden Ansprüche, **dadurch gekennzeichnet, dass** der Wickelkörper (17) um seine Rotationssymmetrieachse drehbar gelagert ist, insbesondere gegenüber einem Chassis oder einer Bodenplatte (16) oder gegenüber einem den Wickelkörper (17) umgebenden Gehäuse (4), insbesondere an einer zentralen Achse (18) des Gehäuses (4).

**9.** Vorrichtung (1) nach einem der vorhergehenden Ansprüche, **dadurch gekennzeichnet, dass** der Wickelkörper (17) durch das Federelement in eine Drehrichtung vorgespannt ist, insbesondere in Aufwickelrichtung des Zugmittels (6).

10. Vorrichtung (1) nach einem der vorhergehenden Ansprüche, **dadurch gekennzeichnet, dass** der Wickelkörper (17) mit einer Arretierungseinrichtung versehen ist, um eine Drehstellung zu fixieren.

11. Vorrichtung (1) nach einem der vorhergehenden Ansprüche, **dadurch gekennzeichnet, dass** das Eingriffselement (37) in einer Richtung zu der Verzahnung (33) des Wickelkörpers (17) hin vorgespannt ist.

12. Vorrichtung (1) nach Anspruch 11, **dadurch gekennzeichnet, dass** das Eingriffselement (37) durch wenigstens eine Feder (36) vorgespannt ist, vorzugsweise wobei die wenigstens eine Feder (36) zur Vorspannung des Eingriffselements (37) durch eine Zug- oder Druckfeder gebildet ist, insbesondere durch eine Schraubenfeder.

13. Vorrichtung (1) nach einem der vorhergehenden Ansprüche, **dadurch gekennzeichnet, dass** das Betätigungselement (28) eine Öffnung (32) zum Hindurchstecken eines Fingers aufweist.

14. Vorrichtung (1) nach einem der vorhergehenden Ansprüche, **dadurch gekennzeichnet, dass** das Betätigungselement (28) innerhalb eines Führungsschlitzes (31) linear verschiebbar geführt ist, der sich entlang einer radialen, von der zentralen Achse (18) aufgespannten Ebene erstreckt, vorzugsweise wobei der Führungsschlitz (31) innerhalb eines Ansatzes (29) oder Bügels (30) des Gehäuses ausgebildet ist, der sich entlang einer radialen, von der zentralen Achse (18) aufgespannten Ebene erstreckt.

15. Vorrichtung (1) nach einem der vorhergehenden Ansprüche, **dadurch gekennzeichnet, dass** das Zugmittel (6) eine langgestreckte, biegsame, aber vorzugsweise nicht dehnbare Gestalt aufweist.

**Claims**

1. Device (1) for adjusting the level or the distance or the inclination of an object (2) relative to a structure, when it is moveably or swivelling coupled thereto, for example for adjustment of the inclination of a backrest (3) of a stroller relative to its chassis, wherein the coupling of the object (2) to the structure comprises a pulling means (6) with at least one strand (5), which is adjustable in its free length (I) and is connectable to the structure in the area of one of its ends (7) and is connected to the device (1) to be fixed to the adjustable object (2) in the area of the other end (8) and is subjected to the tendency to be shortened automatically upon the adjustment, wherein a locking of an adjusted length (I) of the adjustable strand (5) is provided as part of the device (1), which locking is effected by means of form-fitting interlocking elements, wherein the tendency of the adjustable strand (5) to be shortened automatically is effected by a spring element in the form of a spiral spring (21) arranged within a housing (4) of the device (1), wherein said spring element is not directly connected to the pulling means (6) forming the adjustable strand (5), but rather by means of an additional intermediate element in the form of a rotationally symmetrical, circular disc-shaped spooling drum (17) rotatably mounted about a central axis (18) of the housing (4) and comprising a cavity (20), in which the spiral spring (21) is accommodated, wherein at least a part of the pulling means (6) is able to be spooled on the spooling drum (17) in such a way that the at least one strand (5) which is adjustable in its free length is formed by a portion of the pulling means (6) which is not spooled onto on the spooling drum (17), **characterized by**

   a) a continuous peripheral toothing (33) on the outer lateral surface (25) of the spooling drum (17), with teeth which both edges are relatively steep similar to a gearwheel, and
   b) an actuating element (28) protruding from the housing (4), which is guided in a manner displaceable along a direction radial with respect to the central axis (18), and is comprises an engagement element having an engagement range (37) with one or more teeth (34) for the engagement into the toothing (33) on the outer lateral surface (25) of the spooling drum (17), in order to block a movement of the spooling drum (17) during locking and in order to thereby fix the length (I) of the adjustable strand (5),
   c) wherein the adjustment of the free length of the at least one strand (5) is only possible, when the actuating element (28) together with the engagement area (37) is moved from the axis (18) radially outwards.

2. Device (1) according to claim 1, **characterized in that** the pulling means (6) can easily be spooled onto the spooling drum (17), so that a strand (5) adjustable in its length is formed by a portion of the pulling means which is not spooled onto the spooling drum (17).

3. Device (1) according to claim 1, **characterized in that**

   a) the pulling means (6) is able to be spooled around the spooling drum (17) doubly, so that two strands (5) adjustable in their length are formed by portions of the pulling means (6) which are not spooled onto on the spooling drum (17), or that

b) two or more pulling means (6) are able to be spooled around the spooling drum (17), so that two or more strands (5) adjustable in their length are formed by portions of the two or more pulling means (6) which are not spooled onto the spooling drum (17).

4. Device (1) according to claim 3, **characterized in that** two strands (5) are spooled up on the spooling drum (17) in the same direction of rotation.

5. Device (1) according to one of the claims 3 or 4, **characterized in that** two strands (5) extend diametrically away from the spooling drum (17) or are deflected into diametrical directions, especially in the area of the edges of openings (11) of a housing (4) encompassing the spooling drum (17).

6. Device (1) according to one of the preceding claims, **characterized in that** the pulling means (6) are anchored on the circumference (25) of the spooling drum (17) or are guided inwards through openings in the circumference (25) of the spooling drum (17) and are anchored inside the spooling drum (17).

7. Device (1) according to one of the preceding claims, **characterized in that** the circumference (25) of the coil form (17) comprises a reduced-diameter portion (26,27) defined by a radially enlarged portion at one or at both sides.

8. Device (1) according to one of the preceding claims, **characterized in that** the spooling drum (17) is rotatably mounted around its axis of rotational symmetry, especially relative to its chassis or to a bottom plate (16) or relative to a housing (4), which surrounds the spooling drum (17), especially at a central axis (18) of the housing (4).

9. Device (1) according to one of the preceding claims, **characterized in that** the spooling drum (17) is preloaded by the spring element which in a direction of rotation, especially in a spooling direction of the pulling means (6).

10. Device (1) according to one of the preceding claims, **characterized in that** the spooling drum (17) is provided with a locking means, in order to fix an angular position.

11. Device (1) according to one of the preceding claims, **characterized in that** the engagement element (37) is preloaded in a direction towards the toothing (33) of the spooling drum (17).

12. Device (1) according to claim 11, **characterized in that** the engagement element (37) is preloaded by at least one spring (36), preferably wherein the at least one spring (36) for preloading the engagement element (37) is formed by a tension spring or a compression spring, especially by a helical spring.

13. Device (1) according to one of the preceding claims, **characterized in that** the actuating element (28) comprises an opening (32) for plugging a finger through.

14. Device (1) according to one of the preceding claims, **characterized in that** the actuating element (28) is guided in a linearly moveable way within a guide slot (31) which extends along a radial plane generated by a central axis (18), preferably wherein the guide slot (31) is formed within an attachment (29) or a clevis (30) of the housing, which extends along a radial plane generated by the central axis (18).

15. Device (1) according to one of the preceding claims, **characterized in that** the pulling means (6) has an elongated and flexible, but preferably not stretchable shape.

**Revendications**

1. Dispositif (1) de réglage de la hauteur ou de la distance ou de l'inclinaison d'un objet (2) par rapport à une structure, lorsqu'il est accouplé à celle-ci de manière mobile ou pivotante, par exemple pour le réglage de l'inclinaison d'un dossier (3) d'une poussette par rapport au châssis de celle-ci, en ce que l'accouplement de l'objet (2) à la structure comprend un moyen de traction (6) qui présente au moins un brin (5) réglable dans sa longueur (l) libre qui peut être relié dans la zone de l'une de ses extrémités (7) à la structure et qui est relié dans la zone de son autre extrémité (8) au dispositif (1) à fixer à l'objet (2) qui doit être réglé et qui lors du réglage a tendance à se raccourcir automatiquement, en ce qu'un moyen de blocage d'une longueur (l) réglée du brin (5) réglable est prévu dans le cadre du dispositif (1), lequel est réalisé au moyen d'éléments s'engrenant les uns dans les autres par complémentarité de forme, en ce que la tendance à un raccourcissement automatique du brin (5) réglable est provoquée par un élément à ressort en forme de ressort en spirale (21) disposé à l'intérieur d'un boîtier (4) du dispositif (1), lequel élément à ressort n'est pas directement relié au moyen de traction (6) formant le brin (5) réglable, mais plutôt par le biais d'un élément intermédiaire supplémentaire sous forme d'un corps d'enroulement (17) rotatif, en forme de disque circulaire, monté en rotation autour d'un axe central (18) du boîtier (4) comportant une cavité (20) dans laquelle est logé le ressort en spirale (21), en ce qu'au moins une partie du moyen de traction (6) peut être enroulée sur le corps d'enroulement (17) de telle sorte qu'au moins ledit brin (5) réglable en longueur est formé par une zone du moyen de traction (6) qui n'est pas enroulée sur le corps d'enroulement (17), **caractérisé par**

a) une denture (33) comportant des dents s'étendant tout autour de la surface d'enveloppe extérieure (25) du corps d'enroulement (17), dont les deux flancs sont relativement à forte pente comme pour une roue dentée, et
b) un élément d'actionnement (28) saillant du boîtier (4), ledit élément d'actionnement étant guidé de manière à pouvoir se déplacer dans un sens radial par rapport à l'axe central (18) et comportant un élément d'engrènement ayant une zone d'engrènement (37) avec une ou plusieurs dents (34) pour l'engrènement dans la denture (33) au niveau de la surface d'enveloppe extérieure (25) du corps d'enroulement (17), afin de bloquer un déplacement du corps d'enroulement (17) pendant le blocage et de fixer ainsi la longueur réglée (l) du brin (5) réglable,
c) un réglage de la longueur libre d'au moins un brin (5) n'étant possible que lorsque l'élément d'actionnement (28) avec la zone d'engrènement (37) est déplacé radialement vers l'extérieur par rapport à l'axe (18).

2. Dispositif (1) selon la revendication 1, **caractérisé en ce que** le moyen de traction (6) peut être enroulé une fois sur le corps d'enroulement (17), de telle sorte qu'au total un brin (5) réglable en longueur est formé par la zone du moyen de traction non enroulée sur le corps d'enroulement (17).

3. Dispositif (1) selon la revendication 1, **caractérisé en ce que**

a) le moyen de traction (6) peut être enroulé deux fois autour du corps d'enroulement (17), de telle sorte que deux brins (5) réglables en longueur sont formés par des zones du moyen de traction (6) non enroulées autour du corps d'enroulement (17), ou de telle sorte que
b) deux ou plusieurs moyens de traction (6) peuvent être enroulés sur le corps d'enroulement (17), de telle sorte que deux ou plusieurs brins (5) réglables en longueur sont formés par des zones de deux ou plusieurs moyens de traction (6) non enroulées sur le corps d'enroulement (17).

4. Dispositif (1) selon la revendication 3, **caractérisé en ce que** deux brins (5) sont enroulés dans le même sens de rotation sur le corps d'enroulement (17).

5. Dispositif (1) selon l'une des revendications 3 ou 4, **caractérisé en ce que** deux brins (5) s'écartent diamétralement du corps d'enroulement (17) ou sont déviés dans des sens diamétraux, en particulier dans la zone des bords des ouvertures (11) d'un boîtier (4) entourant le corps d'enroulement (17).

6. Dispositif (1) selon l'une des revendications précédentes, **caractérisé en ce que** le ou les moyens de traction (6) sont ancrés en périphérie (25) du corps d'enroulement ou sont guidés vers l'intérieur par des ouvertures dans la périphérie (25) du corps d'enroulement (17) et sont ancrés à l'intérieur du corps d'enroulement (17).

7. Dispositif (1) selon l'une des revendications précédentes, **caractérisé en ce que** la périphérie (25) du corps d'enroulement (17) présente une zone centrale (26, 27) réduite en diamètre, qui est limitée au niveau d'une ou des deux faces frontales par une zone radialement élargie.

8. Dispositif (1) selon l'une des revendications précédentes, **caractérisé en ce que** le corps d'enroulement (17) est monté en rotation autour de son axe de symétrie de rotation, en particulier par rapport à un châssis ou une plaque de base (16) ou par rapport à un boîtier (4) entourant le corps d'enroulement (17), en particulier au niveau d'un axe central (18) du boîtier (4).

9. Dispositif (1) selon l'une des revendications précédentes, **caractérisé en ce que** le corps d'enroulement (17) est précontraint par l'élément à ressort dans un sens de rotation, en particulier dans le sens d'enroulement du moyen de traction (6)).

10. Dispositif (1) selon l'une des revendications précédentes, **caractérisé en ce que** le corps d'enroulement (17) est doté d'un dispositif de blocage afin de fixer une position de rotation.

11. Dispositif (1) selon l'une des revendications précédentes, **caractérisé en ce que** l'élément d'engrènement (37) est précontraint dans un sens vers la denture (33) du corps d'enroulement (17).

12. Dispositif (1) selon la revendication 11, **caractérisé en ce que** l'élément d'engrènement (37) est précontraint par au moins un ressort (36), de préférence **en ce qu'**au moins ledit ressort (36) est formé pour la précontrainte de l'élément d'engrènement (37) par un ressort de traction ou de compression, en particulier par un ressort hélicoïdal.

13. Dispositif (1) selon l'une des revendications précédentes, **caractérisé en ce que** l'élément d'actionnement (28) comporte une ouverture (32) pour le passage d'un doigt.

14. Dispositif (1) selon l'une des revendications précédentes, **caractérisé en ce que** l'élément d'actionnement (28) est guidé de manière à pouvoir se déplacer linéairement à l'intérieur d'une fente de guidage (31) qui s'étend le long d'un plan radial tendu de l'axe central (18), de préférence **en ce que** la fente de guidage (31) est formée à l'intérieur d'un épaulement (29) ou d'un étrier (30) du boîtier qui s'étend le long d'un plan radial tendu de l'axe central (18).

15. Dispositif (1) selon l'une des revendications précédentes, **caractérisé en ce que** le moyen de traction (6) présente une forme allongée, flexible, mais de préférence non extensible.

Fig.1

Fig.2

Fig.3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102012022306 A1
- WO 20178160144 A1
- EP 2878513 A2
- GB 2178306 A
- JP 2003095113 A
- US 2006006629 A1
- EP 0479132 A1